# EUROPEAN PATENT APPLICATION

(11) **EP 3 188 442 A1**
(43) Date of publication of application: **05.07.2017**
(21) Application number: 16207178.1
(22) Date of filing: 28.12.2016
(51) Int. Cl.: H04L 29/06

(54) **DETECTION, PREVENTION, AND/OR MITIGATION OF DOS ATTACKS IN PUBLISH/SUBSCRIBE INFRASTRUCTURE**

(30) Priority: 30.12.2015 US 201514984016
(71) Applicant: VeriSign, Inc., Reston, VA 20190 (US)
(72) Inventor: MARESCA, Paolo, Reston, VA, 20190 (US)
(74) Representative: Fontenelle, Sandrine

(57) **Abstract**

Methods, apparatus, systems, and computer-readable media for detecting denial-of-service ("DoS") attacks include analyzing (702) signals between a publisher and a plurality of subscribers; determining (704) a probability that the signals are a DoS attack; driving (706), via the processor, a probabilistic finite state machine having a plurality of states in which state transitions are based on computed probability; performing (708) preventative processing based on state transitions determined by the probability exceeding at least a first threshold in the probabilistic finite state machine; and performing (710) mitigating processing based on state transitions determined by the probability exceeding an alert threshold in the probabilistic finite state machine.

## Description

### FIELD

The present disclosure relates generally to methods and systems for detecting, preventing and/or mitigating denial-of-service attacks and other cyber-attacks against publish/subscriber infrastructures.

### BACKGROUND

Publish and subscribe (publish/subscribe) systems are asynchronous messaging systems. Messages are categorized in classes and a subscriber expresses interest in one or more classes of messages to a server. The publisher of a message (publisher) does not send the message to a specific receiver (subscriber), but publishes the message to the server, without knowledge of what (if any) subscribers will receive the message. When a message is received for publication, the server transmits the message to subscribers who have expressed interest in the class associated with the message. Thus, the publishers and subscribers are decoupled in space and time, operating independently of each other.

As each user subscribes to various classes of messages, subscribers typically receive only a sub-set of the total messages published. As an example, a subscriber may subscribe to messages based on the topic of the message. Subscribers in a topic-based system will receive all messages published to the topics to which they subscribe. All subscribers to a topic receive the same messages. As another example, a subscriber may subscribe to messages based on the content of the message. In a content-based system, a message is only delivered to a subscriber if the attributes or contents of the message matches constraints defined by the subscriber. Some publish/subscribe system combine topics and contents in a hybrid manner.

In a typical publish/subscribe system, a server receives subscription requests from clients wishing to receive messages based on topic or content. When a user wants to publish a message, the message is sent to the server, which then forwards the message to the various users who have submitted subscription requests matching the message properties. In this way, the server performs a filtering function, only transmitting the message to interested subscribers. Some servers may perform a store-and-forward function during the process of routing messages from publishers to subscribers, decoupling the publishers and subscribers temporally. An example of this temporal decoupling is temporarily taking down a publisher in order to allow the subscriber to work through the backlog, producing a form of bandwidth throttling.

For relatively small installations, publish/subscribe systems, through parallel operation, message caching, and the like, can provide better scalability than a traditional client-server system. However, as a publish/subscribe system is scaled up, the infrastructure may be vulnerable to cyber-attacks. For example, in a denial-of-service ("DoS") attack, an attacker may attempt to overwhelm the infrastructure by sending a large number of malicious requests: targeting topics with large fan-out at subscription time, upon streams of notifications addressing those topics a multiplicative effect is triggered, such multiplicative effect may flood internally the infrastructure and affect the availability of running services..

One variation on the DoS attack is the distributed DoS ("DDoS") attack. In a DDoS attack, rather than having a single client make all of the nuisance requests to the server, the attacker utilizes a network of different clients to simultaneously issue requests to the server. Such a network of requesting clients may be at the attacker's disposal by virtue of an in-place "botnet" in which hundreds or thousands of normal users' computers are infected by malware that is programmed to respond to commands issued by a central machine or authority known as a "bot master." Bot masters may make use of such a collection of "zombie" machines in order to implement a DDoS attack on a server or enterprise.

In a DDoS attack, because the flood of requests may be spread over a large number of disparate clients, each with a different IP address, it may be difficult to detect which requests originate from legitimate clients and which requests originate from malicious clients, such as compromised "zombie" machines in a botnet. Thus, a server may not be able to determine which requests it should ignore and which requests it should service, because all requests may appear substantially identical over the larger pool of IP addresses.

### SUMMARY

Embodiments of the present disclosure relate to systems and methods for detecting denial-of-service attacks and/or other types of cyber-attacks that attempt to overwhelm a publish/subscribe infrastructure. Specifically, a computer-implemented method of detecting DoS attacks includes analyzing, via the processor, signals between a publisher and a plurality of subscribers; determining, via the processor, a probability that the signals are a DoS attack based on sampled variables; driving, via the processor, a probabilistic finite state machine having a plurality of states in which state transitions are based on computed probability; performing, via the processor, preventative processing based on state transitions determined by the probability exceeding at least a first threshold in the probabilistic finite state machine; and performing, via the processor, mitigating processing based on state transitions determined by the probability exceeding an alert threshold in the probabilistic finite state machine.

Additional objects and advantages of the embodiments of the disclosure will be set forth in part in the description which follows, and in part will be obvious from the description, or may be learned by practice of the embodiments. The objects and advantages of the embodiments will be realized and attained by means of the elements and combinations particularly pointed out in the appended claims.

It is to be understood that both the foregoing general description and the following detailed description are exemplary and explanatory only and are not restrictive of the embodiments, as claimed.

### BRIEF DESCRIPTION OF THE DRAWINGS

FIG. 1 is a diagram illustrating exemplary communications in a publish/subscribe system consistent with embodiments of the present disclosure.
FIG. 2 is diagram illustrating a system for diverting traffic intended for a publish/subscribe infrastructure to a mitigation site in the event of a DoS attack, consistent with embodiments of the present disclosure.
FIG. 3 is an example diagram illustrating an algorithm for evaluating signals' samples, consistent with embodiments of the present disclosure.
FIG. 4 is an example detector state machine, consistent with embodiments of the present disclosure.
FIG. 5 is an example algorithm operable in a preventor, consistent with embodiments of the present disclosure.
FIG. 6 is an example algorithm operable in a mitigator, consistent with embodiments of the present disclosure.
FIG. 7 is an example flow diagram of a process for diverting traffic in a publish/subscribe system, consistent with embodiments of the present disclosure.
FIG. 8 is an example computer system for performing the disclosed embodiments, consistent with the present disclosure.

### DETAILED DESCRIPTION

Reference will now be made in detail to example embodiments, which are illustrated in the accompanying drawings. When appropriate, the same reference numbers are used throughout the drawings to refer to the same or like parts.

For simplicity and illustrative purposes, the principles of the present disclosure are described by referring mainly to exemplary embodiments thereof. However, one of ordinary skill in the art would readily recognize that the same principles are equally applicable to, and can be implemented in, all types of information and systems, and that any such variations do not depart from the true spirit and scope of the present disclosure. Moreover, in the following detailed description, references are made to the accompanying figures, which illustrate specific exemplary embodiments. Electrical, mechanical, logical and structural changes may be made to the exemplary embodiments without departing from the spirit and scope of the present disclosure. The following detailed description is, therefore, not to be taken in a limiting sense and the scope of the present disclosure is defined by the appended claims and their equivalents.

Intrusion detection systems (IDS) can be hardware or software protecting a network of resources that are sensitive to outside attacks. Hardware solutions may be human-supervised and can only filter upon a request. Software solutions may further be human-supervised but can have a deeper understanding and can work in spotting patterns whenever needed: most of the time, source IP, volume of data and target resources are indicators to spot malicious attempts.

According to some embodiments, a probabilistic IDS driven by a Probabilistic Automaton (Finite State Machine whose transitions come from probabilities calculation) is an expert system able to automatically spots the patterns, alert, log and react or even proactively act to prevent. An example of such expert system may be in the Spam Detection Systems based on dynamic Bayesian Filters: they are able to separate and/or distinguish the legitimate from the illegitimate flow of messages, such as emails, etc., in real-time, and on huge volume of messages, by learning and evolving.

According to some examples, filtering may be performed to separate legitimate email traffic from illegitimate. Ability to separate and learn from past separations of incoming traffic based on the pattern blacklisting: e.g. words like "Credit Card" can be suspicious, words like "News from the Web" not. It may be difficult to determine whether there is any correlation, and in case label the traffic as spam. A probabilistic approach may be used, words are analyzed and correlated each other with the labeling technique, for example, using the Bayes Theorem, and therefore, only observing the past events, the current and future traffic can be classified.

Various embodiments of the present disclosure include apparatus, systems, computer-readable media storing instructions, executable by a processor to perform methods for detecting denial-of-service attacks and other cyber-attacks against servers and systems. An exemplary system according to various embodiments of the present disclosure includes

Embodiments of the present disclosure relate to systems and methods for detecting denial-of-service attacks and/or other types of cyber-attacks that attempt to overwhelm a server, a system or a combination of them (namely, infrastructure). Specifically, a computer-implemented method of detecting DoS attacks includes analyzing signals between publisher and subscriber devices/participants; determining a probability that the sampled signals can be correlated to a DoS attack, based on a probabilistic automaton (driven by the weighted combination of those signals); determining whether the probability exceeds at least one of a plurality of thresholds; performing preventative processing when it is determined that the probability exceeds at least a first threshold; and performing mitigating processing when it is determined that the probability exceeds an alert (second) threshold.

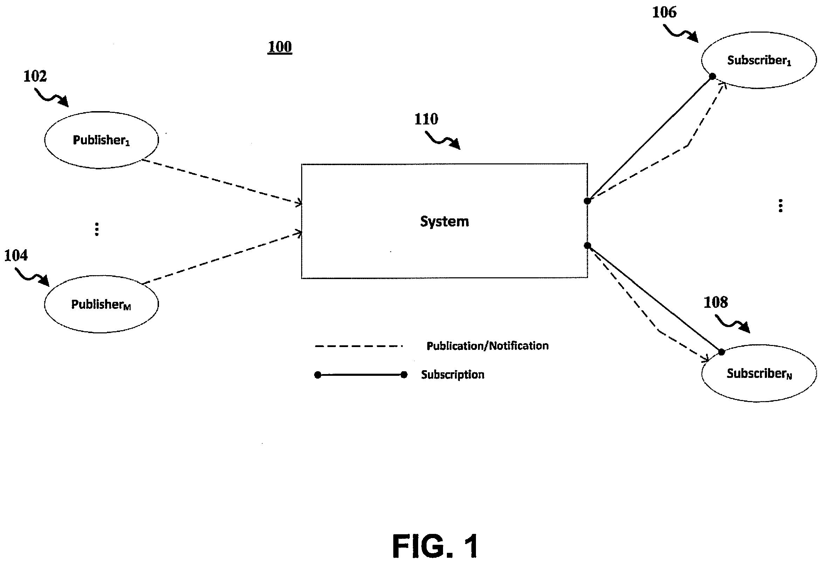

FIG. 1 is a diagram depicting a system environment 100 illustrating communications between one or more exemplary publisher devices 102, 104 and one or more subscriber devices 106, 108 via system 110, consistent with embodiments of the present disclosure. As shown in FIG. 1, publisher devices 102, 104 may provide publication and/or notification services in a publish/subscribe system to one or more subscriber devices 106, 108. Subscribers 106, 108 may subscribe to the publication and/or notification services of publisher devices 102, 104. System 110 may facilitate the communication of the publication and/or notification services between publisher devices 102, 104 and subscriber devices 106, 108.

System 110 may be implemented as a set of computing devices providing services (for example a set of Message Brokers) and it defines the infrastructure to be protected. System 100 may comprise any computing device in a publish/subscribe system capable of being subjected to a cyber-attack, such as a DoS or a DDoS attack.

As discussed herein, a "DoS attack" may refer to a traditional DoS attack, in which all malicious requests or communications originate from a single device, a DDoS attack, in which multiple, separate devices may participate in the attack, or other types of cyber-attacks that attempt to overwhelm a server, a system or the infrastructure composed by any combination of them.

Publisher devices 102, 104 may be implemented as one or more computing devices that are capable of providing notification and/or publication services. Subscriber devices 106, 108 may be implemented as computing devices that are capable of receiving the publication and/or notification services and are further capable of performing subscription processes to subscribe to the services provided by the publisher devices 102, 104.

Although FIG. 1 depicts only two publisher devices, two subscriber devices, and one system device, it may be appreciated that additional publisher devices, subscriber devices, and systems may reside within system environment 100.

Within system environment 100, an event-driven filtering architecture may be implemented to fight DDoS attacks impacting Publish/Subscribe infrastructures. As more fully discussed below, the asynchronous pipeline is composed by pluggable handlers that are able to prevent and/or mitigate DoS attacks: filtering can be applied proactively (i.e. preventing) or reactively (i.e. mitigating). The pipeline is composed by a set of stages and its evolution may be driven by a stochastic FSM (Finite State Machine) or probabilistic automaton. The architecture is particularized to fight against DDoS Threats but can be easily extended/modified to be reused in a more generalized IDS.

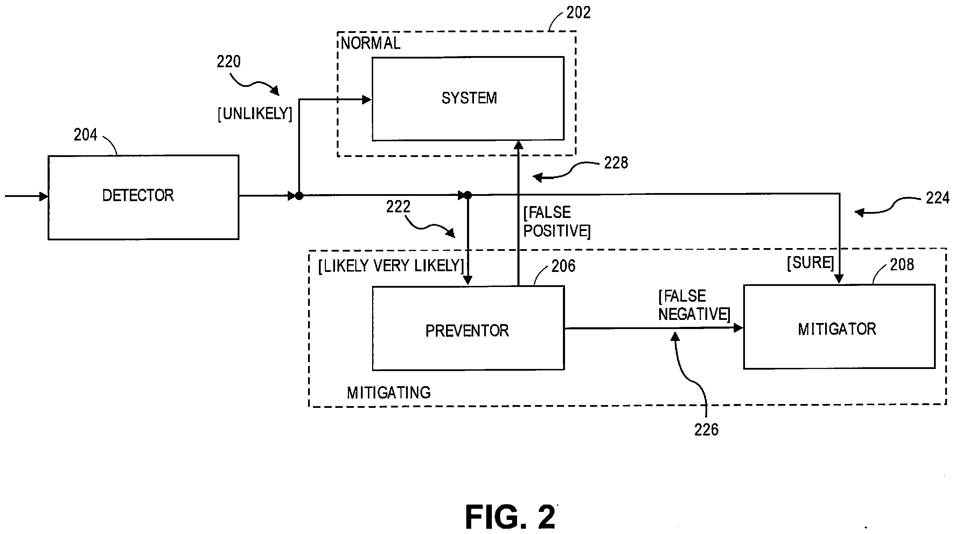

FIG. 2 depicts an example system for detecting, preventing and/or mitigating a DoS attack. As shown in FIG. 2, system 202 is provided to facilitate communication between publisher devices and subscriber devices, not shown. System 202 may be implemented as system 110 in FIG. 1.

The system is composed by processing stages that implement a defense pipeline. The pipeline may be divided into two main stages: i. Detection and ii. Mitigation. The Detection stage has to deal with the online analysis of the incoming events, adopting a stochastic model and a derived algorithm as more fully discussed below; the Mitigation stage has to deal with the attacks (once identified) and apply the set of specified reaction policies, according to the contextual status. The system may be implemented as a pluggable architecture, this means in the overall control flow, according to the contextual needs (i.e. specialization against the usage and type of events), different plugins may be loaded to composing the main two stages; each plugin may implement a set of well defined policies/rules that aim at effectively nullifying any malicious attempt.

The system status refers to the global system (i.e. computing nodes, network, equipments, etc.) and it is modeled by the mean of a set of random variables: the metrics may be aggregated from distributed sites and aggregated via an In-Memory Data Grid (IMDG) supporting the overall distributed computation. The pipeline may be driven by a random process with memory, in particular the detection phase trusts such prediction to trigger the countermeasures. Basically, the Detection phase prevents attacks in the sense: upon certain malicious patterns that alter the system status, a prevention policy may be triggered to starting fighting malicious poisoning/flooding attempts. For this reason, the system is able to use the prevention and/or mitigation tier in any enterprise scale Publish/Subscribe infrastructure.

Detector 204 may be used to implement the detection stage. Detector 204 may process some or all of the data transmitted to and from system 202.

The detector 204 includes a probabilistic finite state machine FSM capable of transitioning between a plurality of states based on a determined probability that the system is under a DoS attack. The detector 204 may trigger operation of a Preventor via path 222 or a Mitigator via path 224 or normal processing via path 220 based on the state of the FSM.

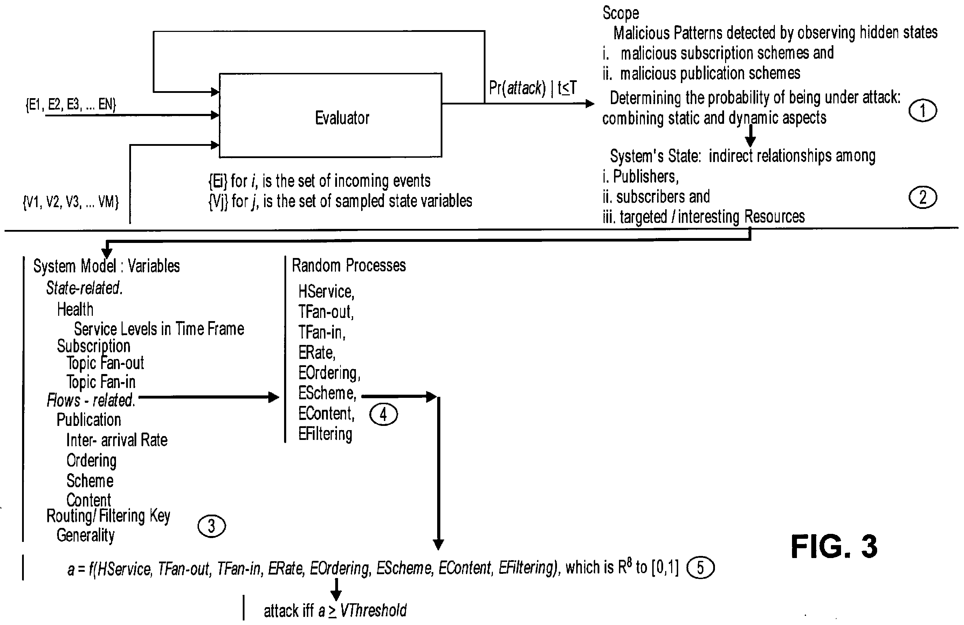

FIG. 3 depicts an evaluator for determining a probability value of whether the system is under a DoS attack. As shown in FIG. 3, signals may be continuously sampled in real-time by the incoming traffic, and the systems' state. Sampling may be implemented on time windows, for example, at each T (time frame), values are computed from collected samples. Probability values are so: P(t < T), meaning that the value is representative on time frame T, i.e. Continuous and time-based Random Processes.

Sampled Signals may be divided into categories of variables. For example, the sampled signals may be divided as follows:
State Related
   1. Health
      a. Services Level
   2. Subscription
      a. Topic Fan-in
      b. Topic Fan-out
Flow Related
   1. Publication
      a. Inter-arrival Rate
      b. Ordering
      c. Scheme
      d. Content
   2. Routing/Filtering Key
      a. Addressing Generality

Each Signal defines a continuous Random Process, it may evolve on 3 states namely Low, Medium and High, and such states may be mapped to ranges of adaptive signals' thresholds: if the reference synthetic statistic is the average, then thresholds can be intended as adaptive values of average for the given variable.

A snapshot of the overall signals' samples may be used to derivate the overall Probability. The Probability of Attack has to be compared against the plurality of FSM thresholds (as said, to drive the probabilistic FSM). A weighted Polynomial Function may be used to combine those Snapshot Values. Each Signal gets associated an Adaptive Weight. Weights are Multiplicative Coefficients and the function maps R^8 real numbers field to [0, 1) real numbers set.

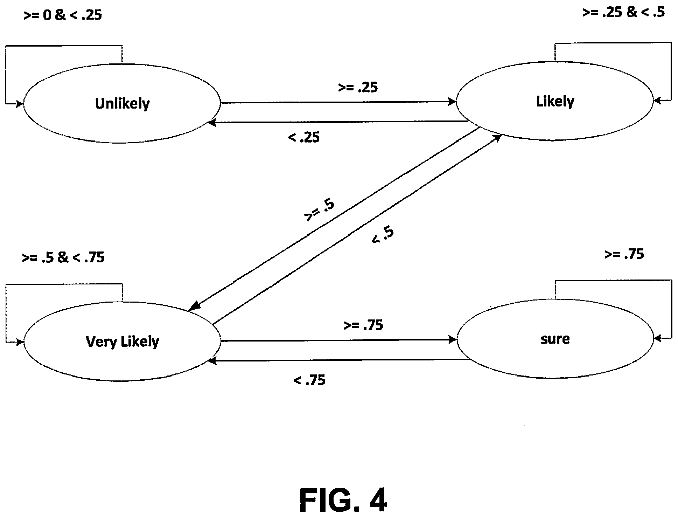

FIG. 4 depicts a state diagram of four states that may be determined based on a probability value that is calculated to determine whether a DoS attack is occurring. Transition Probabilities may be computed according to the Algorithm in Fig. 3. The FSM uses the real-time computation capabilities to drive the DoS handling pipeline. Probabilities are intended over time frames. Transitions can be forced: for example, if the probability is in the range of 'very likely' and the Preventor detects a 'false positive', the state can be forced back to 'likely' or in case 'unlikely' meaning that the systems can be safely feed with incoming traffic without any risk. The FSM may evolve asynchronously with the Detection Algorithm. The detection may be time-windowed, this means that it operates on overlapping bulk of events. The FSM may be designed as a composition of 4 states, like the following ones:
unlikely, probability in [0, .25),
likely, probability in [.25, .50),
very likely, probability in [.50, .75),
sure, probability [.75, 1).

The mitigating state is not part of the detection process but help to avoid any traffic forwarding in case of attack. It may be considered a superstate that does not participate in the evolution of the detection automaton.

A transition between very likely and sure is a disrupting event for the infrastructure and mitigation policies need to be applied immediately (the oracle lets the pipeline to transition in the next stage). During the transition, the detection stage blocks any further incoming event to preserve the overall system availability, this means: i. the forwarding/proxying to the back-end systems is disallowed, ii. metrics are still generated, iii. Patterns are still analyzed, iv. the infrastructure still ingest the traffic.

The Detection stage is able to recover from alert states in case the incoming traffic regularizes itself. Of course, once raised alerting states, the detector needs to recover gracefully towards not alerting statuses, and this is accomplished by the backward transitions.

The Detector behavior may be customized loading specific plugins. For example, transition policies are threshold-based (as illustrated) and they might be easily customized according to the context; moreover, since the expert system nature, a plugin might be able to store the some historical data to adapt dynamically the thresholds.

The Detector has the ability to decide whether to block and completely filter out certain incoming events, in case it recognizes incessant attempts: it identifies the most likely source of the attack and blacklists its events. The prediction algorithm is able to isolate such sources during its own analysis process, so it is able to provide such kind of input to the detector that, in turn, is able to evaluate (according to its own internal state) whether to drastically filter out on per source-basis.

The Detector acts, for example, as a smart proxy, it cannot forward messages to the back-end systems until any of the triggered prevention/mitigation actions have successfully completed (offloading the infrastructure becomes a priority).

For example, assume that at time 't_x' the FSM is in the range 'likely'. The Preventor is working to make sure 'no false positive' or 'no false negative'. If it's a false positive', incoming traffic is not malicious and can be safely forwarded. If it is a 'false negative', incoming traffic is certainly part of a DoS, and the system may need to react. In case of 'false positive', the system is feed with incoming traffic and the FSM is forced to transition back to a 'green state'. In case of'false negative', FSM is forced to transition in the range of 'sure', where mitigator is activated and mitigation policies are implemented. Otherwise, preventor works in background to further analyzing the traffic.

The detection algorithm evolved in the meanwhile, and at time 't_x+y' it computes a probability in the range 'unlikely'. Operations of the Preventor/Mitigator are completed. The FSM is transitioned to a 'green state' indicated via path 220 depicted in FIG. 2 in which the incoming traffic feeds the System without any restriction.

Returning to FIG. 1, Preventor 206 performs preventative processing based on a determination that may be performed by Detector 204 based on a calculated probability value. Preventative processing may be performed if it is determined, based on the calculated probability value, that a DoS attack is likely, or very likely (no certainty, but suspicious state).

It may be appreciated that the preventor can be activated based on the detection algorithm and the finite state machine or forced by a successor/predecessor in the pipeline.

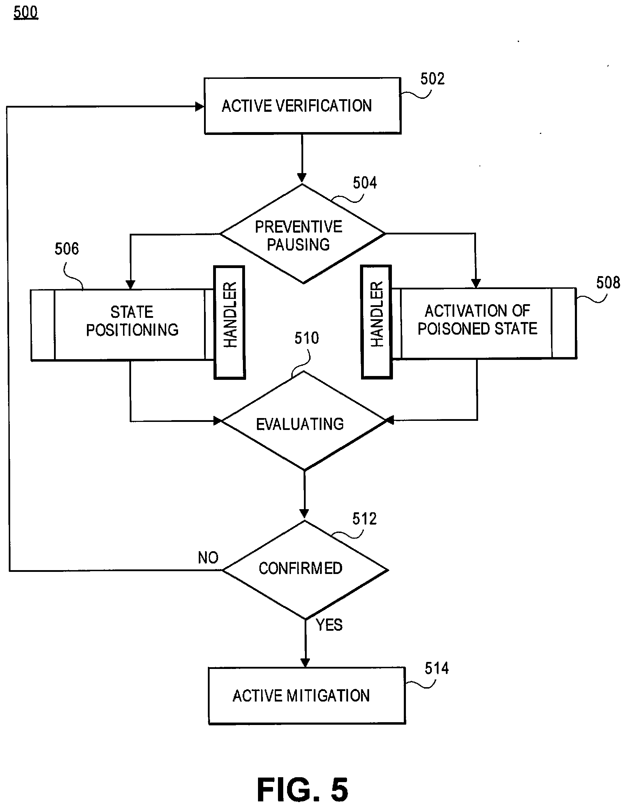

FIG. 5 depicts an example process 500 for performing preventative processing by Preventor 206. As shown in Fig. 5, Preventor 206 performs active verification at 502. At 504, preventative pausing is performed and a first state processing and a second state processing are performed in parallel. State Poisoning evaluation processing 506 may be performed where the signals are analyzed to identify malicious patterns. Activation of Poisoned State evaluation processing 508 may be performed to identify whether the flow of messages is trying to exploit a likely poisoned state. Each of the 'State Poisoning' 506 and the 'Activation of the Poisoned State' 508 may include handlers, the responsibilities of which include Collecting Samples, for example, Health Signals according to Systems' peculiarities and characteristics, Implementing Strategies, for example, cut network connections, delay responses, etc. Handlers may be activated by FSM transitions and represent the Armed Hands of the IDS in that they enable the Real-Time Analysis (with the aim to spot any aggressive/malicious attempt), and allow the Programmatic Reaction, Dealing with Network Traffic, Network Connection, Topic Subscriptions, etc. The Handlers are designed to be customizable, Configurable, Adaptive, and Extendable.

Handlers are characterized in: Active Verification and Active Mitigation. Active Verification Handlers serve the purpose to avoiding 'False Positive", acting as follows
1. Parallel Operations (still on time frames)
   i. Service Response Slow Down
      1. Selectively slow down the routing
      2. Selectively slow down subscriptions
      3. Correlate slowed down subscriptions with incoming flow
         a. I.e. Any variation? Deduce intentionality.
      4. Correlate slowed down routing with incoming flow
         a. I.e. Any variation? Deduce intentionality.
   ii. Evaluate Level of State Poisoning
      1. Identify the hot targets
      2. Deduce effects of Topic Fan-in and Fan-out
      3. Identify the traffic sources
         a. Triggering Publications
         b. Poisoning Subscriptions
   iii. Evaluate Level of Poisoned State Activation
      1. Look at incoming traffic and target Topics
      2. Deduce the multiplicative effect of the incoming flow
2. Final Evaluation: from above operations
   i. If pattern persists, then not a 'False Positive' → transition to 'Mitigating'

On the other hand, Active Mitigation Handlers serve the purpose to protecting the Infrastructure, as explained in the following paragraphs.

The results from the state poisoning 506 and activation of poisoned state 508 may be evaluated in order to determine if processing should remain in the preventative state, where processing returns to 502, or if processing should proceed to 514, active mitigation (depicted as path 226 in FIG. 2). If it is determined that the threat no longer exists based on the determined probability, then processing may proceed to a normal state, as depicted via path 228 as depicted in FIG. 2.

Returning to FIG. 1, Mitigator 208 performs mitigation processing based on a determination that may be performed by detector 204 based on a calculated probability value. Mitigation processing may be performed if it is determined, based on the calculated probability value, that a DoS attack is sure.

It may be appreciated that the mitigator can be activated based on the detection algorithm, or forced by a predecessor in the pipeline, for example, the preventor may activate the mitigator in a case of a 'false negative' (i.e. probability says likely attack but evidences of an attack are spotted by the preventor).

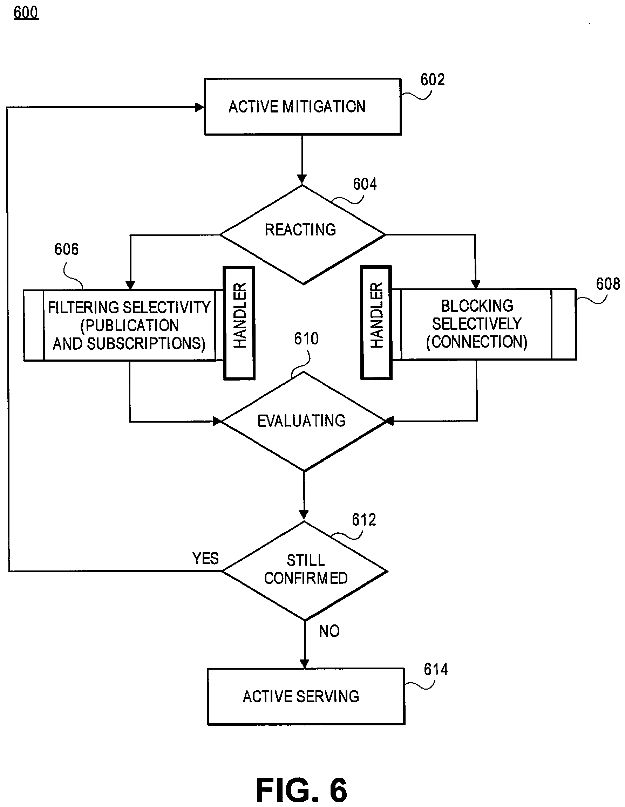

FIG. 6 depicts an example process 600 for performing mitigation processing by Mitigator 208. As shown in Fig. 6, Mitigator 208 performs active mitigation at 602. At 604, reacting is performed and a first state processing and a second state processing are performed in parallel. Filtering selectively 606 may be performed in parallel with blocking selectively 608. Each of the filtering selectively 606 and blocking selectively 608 may include handlers, the objective of which is to avoid impacts on systems availability. The responsibilities of which include
1. Parallel Operations (not necessarily operated all together):
   i. Backlogging
      1. Subscription and Publication requests
         a. Stored for any future need to re-play them
            i. E.g. in case of human intervention to correct a detected 'False Positive'
   ii. Filtering Selectively (only spotted sources)
      1. Subscription and Publication requests
         a. Not played against the infrastructure
   iii. Blocking Selectively (only spotted sources)
      1. Client Connections are cut off
         a. Aborting a connection allows to
            i. Prevent any further flooding of events
            ii. In case of a 'False Positive', mask the error: connection lost is a common problem in network systems

The results from the filtering selectively 606 and blocking selectively 608 may be evaluated in order to determine if processing should remain in the mitigation state, where processing returns to 602, or if processing should proceed to 614, active serving.

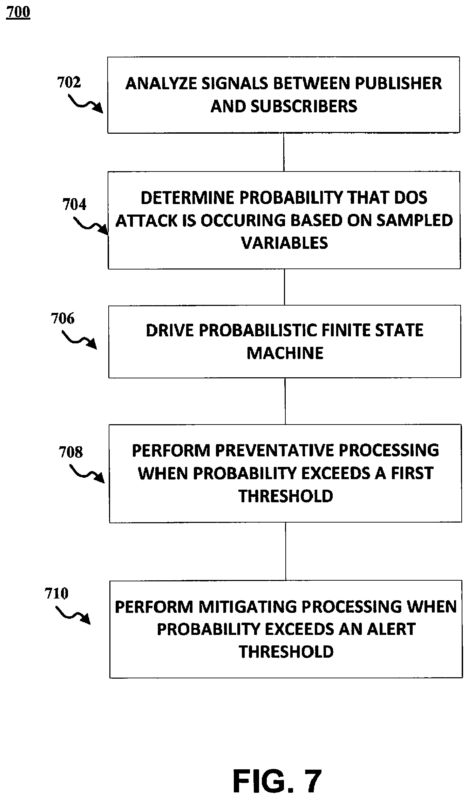

FIG. 7 is a flow diagram illustrating a method 700 for detecting DoS. In method 700, at 702, signals between a plurality of publisher devices and subscriber devices are analyzed. At 704, a probability that the signals are a DoS attack is determined based on sampled variables. At 706, the probabilistic FSM is driven by computed probability. At 708, preventative processing is performed based on the state transitions determined by the probability exceeding at least a first threshold in the probabilistic finite state machine having a plurality of states. At 710, mitigating processing is performed based on the state transitions determined by the probability exceeding an alert threshold in the probabilistic finite state machine. According to some embodiments, preventative processing may include performing in parallel in a first state processing and a second state processing, the first state to reassess the probability to identify malicious patterns and avoid false Positives or Negatives, and the second state interpreting a Flow of Messages to track an effect of malicious flows.

According to some embodiments, preventative processing may include evaluating a result of the first state and a result of the second state; determining that a DoS attack has occurred based on the evaluating of the result of the first state and the result of the second state; and performing mitigating processing.

According to some embodiments, preventative processing may include evaluating a result of the first state and a result of the second state; determining that a DoS attack has not occurred based on the evaluating of the result of the first state and the result of the second state; and re-performing in parallel the first state and the second state, the first state while the recalculated probability is between the first threshold and the second threshold.

According to some embodiments, mitigation processing may include operating in parallel a filtering state and a blocking state.

According to some embodiments, mitigation processing may include evaluating a result of the filtering state and a result of the blocking state; determining whether a DoS attack continues based on the evaluating of the result of the filtering state and the result of the blocking state; continuing to perform mitigating processing when it is determined that the DoS attack continues; and ending the mitigating processing when it is determined that the DoS attack is no longer occurring.

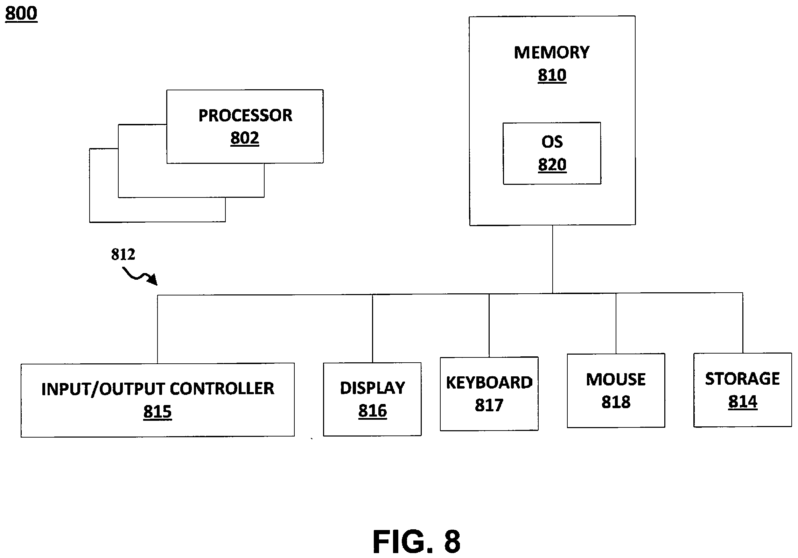

FIG. 8 illustrates a computer system 800 that is consistent with embodiments of the present disclosure. It may be appreciated that according to some embodiments, one or more components, as discussed herein, may be located on a node, device, agent, system, etc., that is different from a node, device, agent, system, etc., that includes another one or more components. For example, the detector as discussed herein, may be located at a different node, device, agent, system, etc., than the node, device, agent, system, etc., that includes the preventer and/or the mitigator as discussed herein.

In general, embodiments of a DoS attack mitigation system may be implemented in various computer systems, such as a personal computer, a server, a workstation, an embedded system, a multifunction device, a distributed system, a combination thereof, etc.. The computer program may exist in a variety of forms both active and inactive. For example, the computer program can exist as software program(s) comprised of program instructions in source code, object code, executable code or other formats; firmware program(s); or hardware description language ("HDL") files. Any of the above, including the detector, the preventor, and the mitigator, can be embodied on a non-transitory computer readable medium, which include storage devices, in compressed or uncompressed form. However, for purposes of explanation, system 800 is shown as a general purpose computer that is well known to those skilled in the art. Examples of the components that may be included in system 800 will now be described.

As shown, system 800 may include at least one processor 802, a keyboard 817, a pointing device 818 (e.g., a mouse, a touchpad, and the like), a display 816, main memory 810, an input/output controller 815, and a storage device 814. Storage device 814 can comprise, for example, RAM, ROM, flash memory, EEPROM, CD-ROM or other optical disk storage, magnetic disk storage or other magnetic storage devices, or any other medium that can be used to carry or store desired program code in the form of instructions or data structures and that can be accessed by a computer. A copy of the computer program embodiment of the printer driver can be stored on, for example, storage device 814. System 800 may also be provided with additional input/output devices, such as a printer (not shown). The various components of system 800 communicate through a system bus 812 or similar architecture. In addition, system 800 may include an operating system (OS) 820 that resides in memory 810 during operation. One skilled in the art will recognize that system 800 may include multiple processors 802. For example, system 800 may include multiple copies of the same processor. Alternatively, system 800 may include a heterogeneous mix of various types of processors. For example, system 800 may use one processor as a primary processor and other processors as co-processors. For another example, system 800 may include one or more multicore processors and one or more single core processors. Thus, system 800 may include any number of execution cores across a set of processors (e.g., processor 802). As to keyboard 817, pointing device 818, and display 816, these components may be implemented using components that are well known to those skilled in the art. One skilled in the art will also recognize that other components and peripherals may be included in system

Main memory 810 serves as a primary storage area of system 800 and holds data that is actively used by applications, such as the printer driver in the barcode printing system, running on processor 802. One skilled in the art will recognize that applications are software programs that each contains a set of computer instructions for instructing system 800 to perform a set of specific tasks during runtime, and that the term "applications" may be used interchangeably with application software, application programs, device drivers, and/or programs in accordance with embodiments of the present teachings. Memory 810 may be implemented as a random access memory or other forms of memory as described below, which are well known to those skilled in the art.

OS 820 is an integrated collection of routines and instructions that are responsible for the direct control and management of hardware in system 800 and system operations. Additionally, OS 820 provides a foundation upon which to run application software and device drivers. For example, OS 820 may perform services, such as resource allocation, scheduling, input/output control, and memory management. OS 820 may be predominantly software, but may also contain partial or complete hardware implementations and firmware. Well known examples of operating systems that are consistent with the principles of the present teachings include MICROSOFT WINDOWS (e.g., WINDOWS CE, WINDOWS NT, WINDOWS 2000, WINDOWS XP, and WINDOWS VISTA), MAC OS, LINUX, UNIX, ORACLE SOLARIS, OPEN VMS, and IBM AIX.

The foregoing description is illustrative, and variations in configuration and implementation may occur to persons skilled in the art. For instance, the various illustrative logics, logical blocks, modules, and circuits described in connection with the embodiments disclosed herein may be implemented or performed with a general purpose processor (e.g., processor 802), an application specific integrated circuit, a field programmable gate array or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a microprocessor, a plurality of microprocessors, or any other such configuration.

In one or more exemplary embodiments, the functions described may be implemented in hardware, software, firmware, or any combination thereof. For a software implementation, the techniques described herein can be implemented with modules (e.g., procedures, functions, subprograms, programs, routines, subroutines, modules, software packages, classes, and so on) that perform the functions described herein. A module can be coupled to another module or a hardware circuit by passing and/or receiving information, data, arguments, parameters, or memory contents. Information, arguments, parameters, data, or the like can be passed, forwarded, or transmitted using any suitable means including memory sharing, message passing, token passing, network transmission, and the like. The software codes can be stored in memory units and executed by processors. The memory unit can be implemented within the processor or external to the processor, in which case it can be communicatively coupled to the processor via various means as is known in the art.

If implemented in software, the functions may be stored on or transmitted over a computer-readable medium as one or more instructions or code. Computer-readable media includes both tangible, non-transitory computer storage media and communication media including any medium that facilitates transfer of a computer program from one place to another. A storage media may be any available tangible, non-transitory media that can be accessed by a computer. By way of example, and not limitation, such tangible, non-transitory computer-readable media can comprise RAM, ROM, flash memory, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes CD, laser disc, optical disc, DVD, floppy disk and Blu-ray disc where disks usually reproduce data magnetically, while discs reproduce data optically with lasers. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Combinations of the above should also be included within the scope of computer-readable media.

Resources described as singular or integrated can in one embodiment be plural or distributed, and resources described as multiple or distributed can in embodiments be combined. The scope of the present teachings is accordingly intended to be limited only by the following claims. Although the invention has been described with respect to specific embodiments, those skilled in the art will recognize that numerous modifications are possible. For instance, the proxy servers can have additional functionalities not mentioned herein. In addition, embodiments of the present disclosure can be realized using any combination of dedicated components and/or programmable processors and/or other programmable devices. While the embodiments described above can make reference to specific hardware and software components, those skilled in the art will appreciate that different combinations of hardware and/or software components can also be used and that particular operations described as being implemented in hardware might also be implemented in software or vice versa.

## Claims

1. A computer-implemented method, comprising:
analyzing (702), via processor, implemented at least in part in hardware, signals between a publisher (102,104) and a plurality of subscribers (106,108);
determining (704), via the processor, a probability that the signals are a DoS attack based on sampled variables;
driving (706), via the processor, a probabilistic finite state machine having a plurality of states in which state transitions are based on computed probability;
performing (708), via the processor, preventative processing based on state transitions determined by the probability exceeding at least a first threshold in the probabilistic finite state machine; and
performing (710), via the processor, mitigating processing based on state transitions determined by the probability exceeding an alert threshold in the probabilistic finite state machine.

2. The method of claim 1, wherein performing preventative processing comprises:
performing (506,508) in parallel in a first state processing and a second state processing, the first state to reassess the probability to identify malicious patterns and avoid false Positives and Negatives, and the second state interpreting a Flow of Messages to track an effect of malicious flows.

3. The method of claim 2, wherein preventative processing further comprises:
evaluating a result of the first state and a result of the second state;
determining that a DoS attack has occurred based on the evaluating of the result of the first state and the result of the second state; and
performing mitigating processing.

4. The method of claim 2, wherein preventative processing further comprises:
evaluating a result of the first state and a result of the second state;
determining that a DoS attack has not occurred based on the evaluating of the result of the first state and the result of the second state; and
re-performing in parallel the first state and the second state, the first state while the reassessed probability is between the first threshold and the alert threshold.

5. The method of claim 1, wherein mitigating processing comprises:
operating in parallel a filtering state (606) and a blocking state (608).

6. The method of claim 5, wherein mitigating processing further comprises:
evaluating a result of the filtering state and a result of the blocking state;
determining whether a DoS attack continues based on the evaluating of the result of the filtering state and the result of the blocking state;
continuing to perform mitigating processing when it is determined that the DoS attack continues; and
ending the mitigating processing when it is determined that the DoS attack is no longer occurring.

7. An apparatus (202,800) for detecting a denial-of-service (DoS) attack, comprising:
a processor at a first server system; and
a memory communicatively coupled to the processor, the processor configured to perform a method according to any of claims 1 to 6.

8. A non-transitory computer-readable storage medium including instructions which when executed by a processor implemented at least in part in hardware within a computer system, causes the processor to execute a method for mitigating denial-of-service (DoS) attacks according to any of claims 1 to 6.
